Europäisches Patentamt

European Patent Office

Office européen des brevets

(19)

(11) Veröffentlichungsnummer : **0 065 023**
**B1**

(12) EUROPÄISCHE PATENTSCHRIFT

(45) Veröffentlichungstag der Patentschrift :
28.08.85

(51) Int. Cl.⁴ : **F 16 H 33/06, F 16 H 33/20**

(21) Anmeldenummer : **81103798.5**

(22) Anmeldetag : **18.05.81**

(54) Schwingmotor-Federgetriebe-Kombination.

(43) Veröffentlichungstag der Anmeldung :
24.11.82 Patentblatt 82/47

(45) Bekanntmachung des Hinweises auf die Patenterteilung : 28.08.85 Patentblatt 85/35

(84) Benannte Vertragsstaaten :
AT CH DE FR GB IT LI NL SE

(56) Entgegenhaltungen :
EP-A- 0 021 452
US-A- 4 188 831

(73) Patentinhaber : Schnell, Joachim, Dr.
Amselweg 7
D-6348 Herborn 4 (DE)

(72) Erfinder : Schnell, Joachim, Dr.
Amselweg 7
D-6348 Herborn 4 (DE)

## Beschreibung

Die Erfindung bezieht sich auf eine Schwingmotor-Federgetriebe-Kombination mit einem oder mehreren Antriebsschwingmotoren, die periodische Hin- und Herbewegungen oder einer gleichförmigen Bewegung überlagerte periodische Hin- und Herbewegungen ausführen, und einem oder mehreren Federgetrieben, die die Antriebsbewegung oder -bewegungen über Federn und Freiläufe und/oder Schaltkupplungen auf eine oder mehrere sich drehende Abtriebswellen übertragen, wobei die Federn periodisch last- und antriebsabhängig gespannt und entspannt werden, so daß sich die Abtriebsdrehzahl oder -drehzahlen stufenlos last- und antriebsabhängig einstellen.

Stufenlose Motor-Getriebe-Kombinationen werden in einer Vielzahl von Maschinen, z. B. in Kraftfahrzeugen, eingesetzt, um die Motor-charakteristik möglichst optimal in die erforderliche Abtriebscharakteristik zu übersetzen.

Die in Kraftfahrzeugen heute überwiegend verwendeten Verbrennungs-Hubkolbenmotoren sind Schwingmotoren im Sinne unserer Definition im einleitenden Oberbegriff. Die Hin- und Herbewegungen dieser Motoren werden üblicherweise mit Kurbelwellen in Drehbewegungen umgewandelt und über Stufenschaltgetriebe oder automatische stufenlose Getriebe und über Sperrdifferentialgetriebe auf die Antriebsräder übertragen. Der Wirkungsgrad derartiger Motor-Getriebe-Kombinationen ist nicht gut. Im Motor treten hohe Reibungsverluste auf, weil der Motor auch bei kleinen Leistungen die volle Hin- und Herbewegung ausführen muß, die Belastung nicht in der Kolbenbewegungsrichtung erfolgt und hohe Drehzahlen bei starkem Anpreßdruck in den Pleuellagern auftreten. Die Verluste in aufwendigen stufenlosen Getrieben sind insbesondere bei großer Drehzahlübersetzung beachtlich.

Hubkolbenmotoren ohne Kurbelwelle, wie sie z. B. für Druckpumpen verwendet werden, haben einen besseren Wirkungsgrad. Dieser geht allerdings weitgehend wieder verloren, wenn man die Schwingbewegung der Druckpumpe mit einem stufenlosen Hydraulikantrieb in eine Drehbewegung übersetzt, da hierbei hohe Reibungsverluste auftreten.

Die Kombination von Schwingmotoren mit stufenlosen, lastabhängigen Federgetrieben ist aus der EP-A-0 021 452 bekannt. Federgetriebe bewirken eine verlustarme Übersetzung der Schwingbewegung in eine Drehbewegung, deren Drehzahl lastabhängig stufenlos einstellbar ist.

Die bekannten Schwingmotor-Getriebe-Kombinationen übertragen starke Vibrationen auf das Gehäuse. Das wird insbesondere bei Kraftfahrzeugen deutlich, wo durch die Verwendung von Motoren mit mehreren Zylindern, durch große Massen, hohe Drehzahlen und aufwendige Dämpfungsmaßnahmen die Laufruhe verbessert wird. Die meisten dieser Maßnahmen ergeben Leistungsverluste und sind insbesondere bei kleinen Kraftfahrzeugen nicht praktikabel. Aufgabe der Erfindung ist die Entwicklung einer Schwingmotor-Getriebe-Kombination, die eine Übersetzung der Hin- und Herbewegungen des Antriebs in Drehbewegungen mit last- und antriebsabhängiger Drehzahl gestattet, wobei der Wirkungsgrad in einem weiten Bereich gut ist und die Übertragung von Vibrationen auf das Gehäuse auch bei kleinen Gehäusemassen und kleinen Schwingfrequenzen gering ist.

Die Erfindung, wie sie im Patentanspruch 1 gekennzeichnet ist, löst die Aufgabe durch die Kombination von stufenlosen, lastabhängigen Federgetrieben mit Antriebsschwingmotoren, die mindestens zwei gegeneinander schwingende Bauteile enthalten, die keine starre Verbindung zu einem Gehäuse haben und mindestens eins der Bauteile so mit dem Gehäuse zusammenwirkt, daß die Schwingbewegung oder -bewegungen nicht oder nur geringfügig behindert werden oder keine oder nur wenig Schwingungsenergie auf das Gehäuse übertragen wird, was durch gleitende oder schwebende Lagerung, durch elastische Aufhängung oder über sich am Gehäuse abstützende Federgetriebe erreicht werden kann, und mindestens eins der Bauteile mit mindestens einem Federgetriebe gekoppelt ist. Bevorzugte Ausführungsformen der Erfindung sind in den Patentansprüchen 2 bis 10 festgehalten.

Durch diesen Aufbau ergibt sich bei er-findungsgemäßen Motor-Getriebe-Kombinatio-nen der Vorteil weitgehender Vibrationsfreiheit des Gehäuses trotz starker Motorvibration.

Der Wirkungsgrad von Schwingmotoren ist besser als der von Rotationsmotoren. Da die Verluste in guten Stahlfedern und Freiläufen gering sind, ist der Wirkungsgrad von Federgetrieben wesentlich besser als der von vergleichbaren anderen bekannten Getrieben. Da sich die Abtriebsdrehzahl stufenlos in Abhängigkeit vom Antriebsschub und Abtriebsdrehmoment auf den jeweiligen Betriebszustand einstellt, kann der Motor auch bei stark schwankenden Abtriebsbedingungen in einem günstigen Arbeitsbereich laufen. Da außerdem verlustreiche Dämpfungsmaßnahmen entfallen, ist der Wirkungsgrad einer erfindungsgemäßen Schwingmotor-Federgetriebe-Kombination besser als der von bekannten Motor-Getriebe-Kombinationen.

Erfindungsgemäße Motor-Getriebe-Kombinationen sind gut geeignet für den Einsatz in Kraftfahrzeugen und dank ihres einfachen Aufbaus wesentlich billiger herzustellen als die üblicherweise verwendete Kombination von Hubkolbenmotor, Kurbelwelle, stufenlos einstellbarem Getriebe und Sperrdifferentialgetriebe. Durch den einfachen Aufbau und die ausschließliche Verwendung erprobter Bauteile wie Schwingmotoren, Stahlfedern und Freiläufen ist ein wartungs- und störungsarmer Betrieb und eine gute Lebensdauer erfindungsgemäßer Motor-Getriebe-Kombinationen gegeben.

Zur Beschreibung der Erfindung sind acht Zeichnungen beigefügt :

Figur 1 zeigt den prinzipiellen Aufbau einer Schwingmotor-Federgetriebe-Kombination.

Figur 2 zeigt einen Zweitakt-Verbrennungs-Hubkolbenschwingmotor.

Figur 3 zeigt den Aufriß und .

Figur 4 den Grundriß der Kombination eines Hubkolbenschwingmotors mit mehreren Federgetrieben und zwei Abtriebswellen.

Figur 5 zeigt den Längsschnitt und

Figur 6 den Querschnitt einer Schwingmotor-Federgetriebe-Kombination mit einem elektromechanischen Schwingmotor.

Figur 7 zeigt eine Schwingmotor-Federgetriebe-Kombination mit einem piezoelektrischen Schwinger.

Figur 8 zeigt eine vorteilhafte Federkombination für Federgetriebe.

Im folgenden wird die Erfindung anhand von zwei Ausführungsbeispielen und einigen Hinweisen auf vorteilhafte Variationen näher beschrieben.

Beispiel 1

Zweitakt-Verbrennungs-Hubkolbenmotor mit stufenlosem Federgetriebe für Kraftfahrzeuge mit Zweiradantrieb.

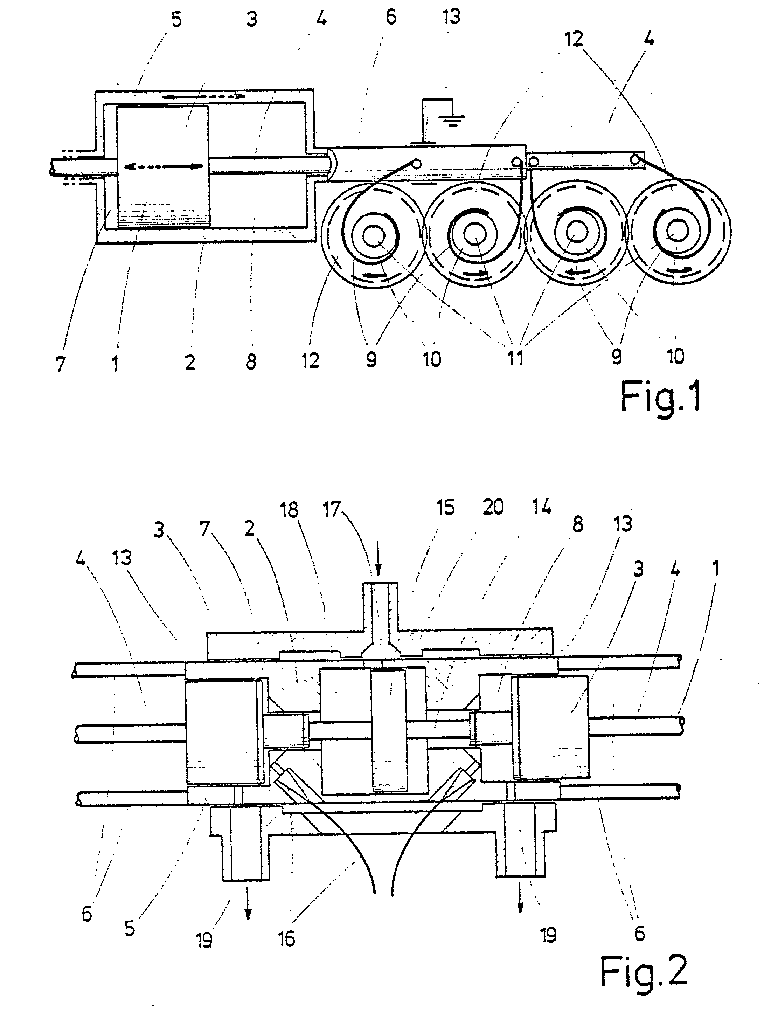

In Figur 1 ist der prinzipielle Aufbau einer erfindungsgemäßen Motor-Getriebe-Kombination mit einem Hubkolbenmotor skizziert. Das eine der gegeneinander schwingenden Bauteile 1 wird durch den Kolben 3, die Schubstangen 4 und andere mit dem Kolben 3 verbundene, der Einfachheit halber nicht eingezeichnete Teile gebildet. Das andere der gegeneinander schwingenden Bauteile 2 bildet der Zylinder 5, die Schubrohre 6 und andere, mit dem Zylinder 5 verbundene, nicht eingezeichnete Teile. Der Hubkolbenmotor wird durch das Gleitlager 13 im Gehäuse gehalten. Durch abwechselndes Beschicken der Arbeitskammern 7 und 8 schwingen die Bauteile 1 und 2 gegeneinander und zwar mit gegensinnig gleicher Amplitude und Geschwindigkeit, wenn die trägen Massen der Bauteile 1 und 2 gleich groß sind. Die Hin- und Herbewegung der Bauteile 1 und 2 wird von der Schubstange 4 und dem Schubrohr 6 durch Federn 9 und Freiläufe 10 in eine Drehbewegung der Wellen 11 übertragen, die durch Zahnräder 12 miteinander gekoppelt sind, so daß jede der im Gehäuse gelagerten Wellen 11 als Abtriebswelle benutzt werden kann. Jedes der gegeneinander schwingenden Bauteile 1 und 2 bewegt zwei gegensinnig angebrachte Federn 9 und die zugehörigen Freiläufe 10, die so angebracht sind, daß von der einen Feder-Freilauf-Kombination die Hinbewegung und von der anderen die Herbewegung in eine Drehung der zugehörigen Welle 11 übertragen wird. Die jeweils nicht angetriebenen Wellen 11 laufen über die Zahnräder 12 bei offenem Freilauf mit.

Bei kleinem Abtriebsdrehmoment werden die Federn nur wenig gespannt, die Abtriebsdrehzahl ist groß. Bei großem Abtriebsdrehmoment werden die Federn stark gespannt und die Abtriebsdrehzahl ist klein. Die Antriebsenergie wird während der Federspannungsphase zur Bewegung der Abtriebswelle 11 und zum Spannen der Feder 9 benutzt. Während der Federentspannungsphase wird die gespeicherte Federenergie teilweise zur Bewegung der Abtriebswelle 11 benutzt und teilweise and den Antrieb zurückgegeben. Wenn die Feder 9 voll entspannt ist, löst sich der Freilauf 10 und die Welle 11 läuft leer mit bis die nächste Federspannungsphase beginnt.

In Figur 2 ist ein Zweitakt-Verbrennungs-Hubkolbenmotor skizziert, der in der praktischen Erprobung einen guten Wirkungsgrad zeigte. Zwei durch eine Verbindungsstange 14 verbundene Zweistufenkolben 3, ein Vorverdichtungskolben 15 und die Schubstangen 4 bilden das eine der gegeneinander schwingenden Bauteile 1. Der Zylinderblock 5 mit den Zündkerzen 16 und den vier Schubstangen 6, die die Schubrohre der Figur 1 ersetzen, bilden das zweite der gegeneinander schwingenden Bauteile 2.

Der Zylinderblock 5 ist über Gleitlager 13 mit dem Gehäuse 20 verbunden. Das vom gehäusefesten Vergaser kommende Treibstoff-Luft-Gemisch wird entweder über eine flexible Schlauchleitung oder über eine gleitende Zuführung 17 in den Vorverdichtungsraum 18 geführt, nach der Vorverdichtung in einen der Verbrennungsräume 7 oder 8 geleitet und dort nach der Verdichtung gezündet. Aus dem anderen Verbrennungsraum 8 oder 7 werden gleichzeitig die Verbrennungsprodukte über flexible oder gleitende Auspuffrohre 19 ausgestoßen und neues Treibstoff-Luft-Gemisch aus dem Vorverdichtungsraum 18 zugeführt.

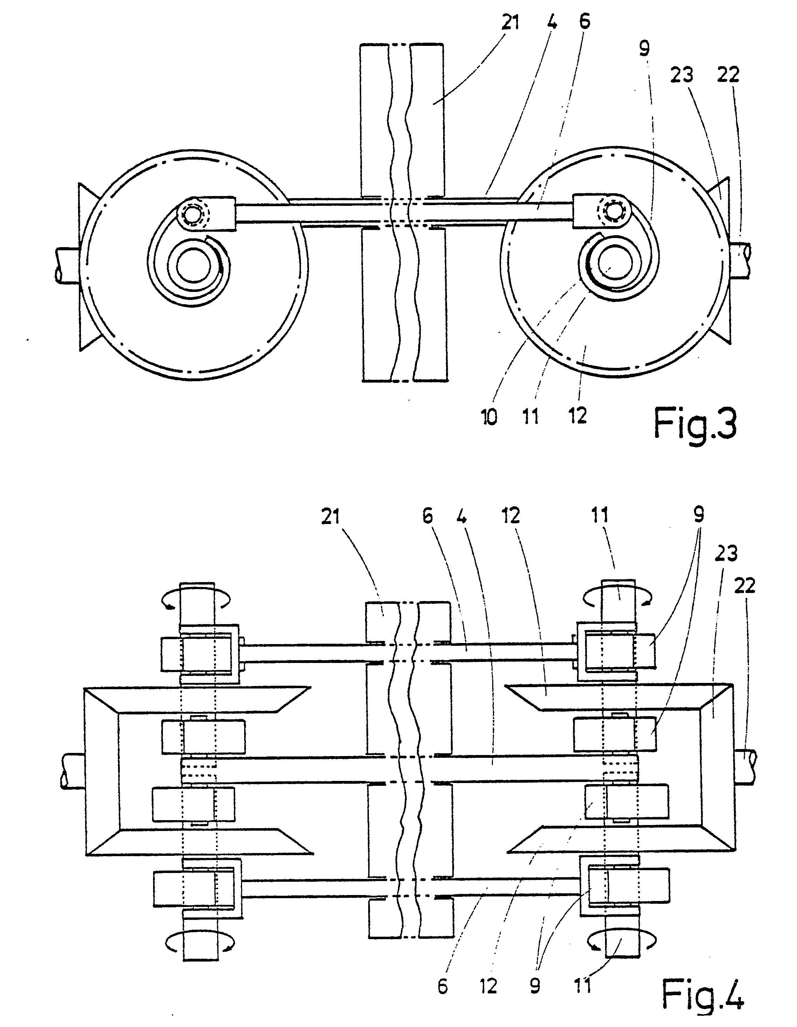

In den Figuren 3 und 4 ist der Aufriß und der Grundriß von zwei stufenlosen Federgetrieben skizziert, die an beiden Seiten des in Figur 2 skizzierten Hubkolbenmotors, der hier nur durch einen unterbrochenen Block 21 angedeutet ist, angebracht sind. Die Federgetriebe sind im Prinzip so aufgebaut wie das in Figur 1 skizzierte, die Bezeichnungen sind dieselben. Von den vier Abtriebswellen 11 der Figur 1 wurden je zwei gleichsinnig drehende zusammengelegt und mit einem Kegelzahnrad 12 versehen. Die sich so ergebenden zwei gegensinnig drehenden Wellen 11 — in Figur 4 punktiert durchgezeichnet — wurden fluchtend angeordnet und der Abtrieb erfolgt über eine Welle 22, die über ein Kegelzahnrad 23 mit den beiden Kegelzahnrädern 12 verbunden ist. Durch diese Anordnung ergibt sich ein kompakter Aufbau der Federgetriebe.

Die beiden Federgetriebe, ihre Federn 9, Freiläufe 10 und Wellen 11 und 22 sind spiegelbildlich angeordnet zum Motorquerschnitt. Beim Betrieb der Motor-Getriebe-Kombination befinden sich dann die jeweils diagonal gegenüber liegenden Federn 9 der beiden Federgetriebe in der gleichen Arbeitsphase. Der Motorschub wirkt also im gleichen Sinne auf zwei in Bezug auf die Motorachse gegenüber liegende Stellen, so daß keine nennenswerten Querkrägte auftreten, die die Reibung zwischen Kolben und Zylindrer erhöhen. Die beiden Abtriebswellen 22 der Federgetriebe drehen sich beim Betrieb der Motor-Getriebe-Kombination im gleichen Sinne.

Das beschriebene Ausführungsbeispiel einer erfindungsgemäßen Schwingmotor-Federgetriebe-Kombination ist gut geeignet für den Einsatz in Kraftfahrzeugen mit Zweiradantrieb. Die beiden Abtriebswellen 22 können für die Vorwärtsfahrt direkt mit den beiden Antriebsrädern gekoppelt werden. Für die Rückwärtsfahrt ist ein zusätzliches Wendeschaltgetriebe erforderlich. Die Auslegung der Federgetriebe richtet sich nach den Motoreigenschaften und der erforderlichen Abtriebscharakteristik. In diesem Ausführungsbeispiel benutzen wir Stahlfederkombinationen mit progressiver Federcharakteristik und Vorspannung, die Abmessungen sind so gewählt, daß sich bei einer Motorschwingfrequenz von 6 000 pro Minute eine maximale Abtriebsdrehzahl von 2 000 Umdrehungen pro Minute ergibt.

Die einfach aufgebaute erfindungsgemäße Kombination von Verbrennungs-Hubkolbenmotor, stufenlosem Federgetriebe und Wendegetriebe ist einer etwa leistungsgleichen, heute in Kraftfahrzeugen üblichen Kombination aus Verbrennungs-Hubkolbenmotor, Kurbelwelle, stufenlosem hydrodynamischen Drehmomentwandler mit Dreigang-Nachschaltgetriebe und Sperrdifferentialgetriebe in Bezug auf Preis, Abmessungen, Wirkungsgrad, Wartungsfreiheit; Laufruhe und Fahrverhalten überlegen. Da die beiden Federgetriebe weitgehend unabhängig voneinander lastabhängig arbeiten, hat z. B. das Durchdrehen eines Antriebsrades nur einen geringen Einfluß auf das Drehmoment des anderen Antriebsrades.

Das Anlassen der beschriebenen, in einem Kraftfahrzeug eingebauten Motor-Getriebe-Kombination erfolgt über einen elektromechanischen Schwingmotor, umgekehrt kann dem Hubkolbenmotor über einen Schwinggenerator elektrische Energie zum Laden der Batterie entnommen werden.

Bei der beschriebenen Motor-Getriebe-Kombination ist keine Motorbremse vorgesehen. Wenn die Abtriebswellen 22 schneller laufen als der Motor, sind alle Freiläufe 10 frei und das Fahrzeug läuft im Leerlauf. Die Bremsen müssen also stärker dimensioniert sein als die heute üblichen. Da die erfindungsgemäße Motor-Getriebe-Kombination nur einen geringen Platzbedarf hat, ist es möglich Anordnungen unterzubringen, die die Bremsenergie speichern und später wieder zum Antrieb verwenden. Bei elektrischer Speicherung kann z. B. ein vergrößerter Anlassermotor bei geringer oder fehlender Leistung des Hubkolbenmotors zum Antrieb benutzt werden.

Beispiel 2

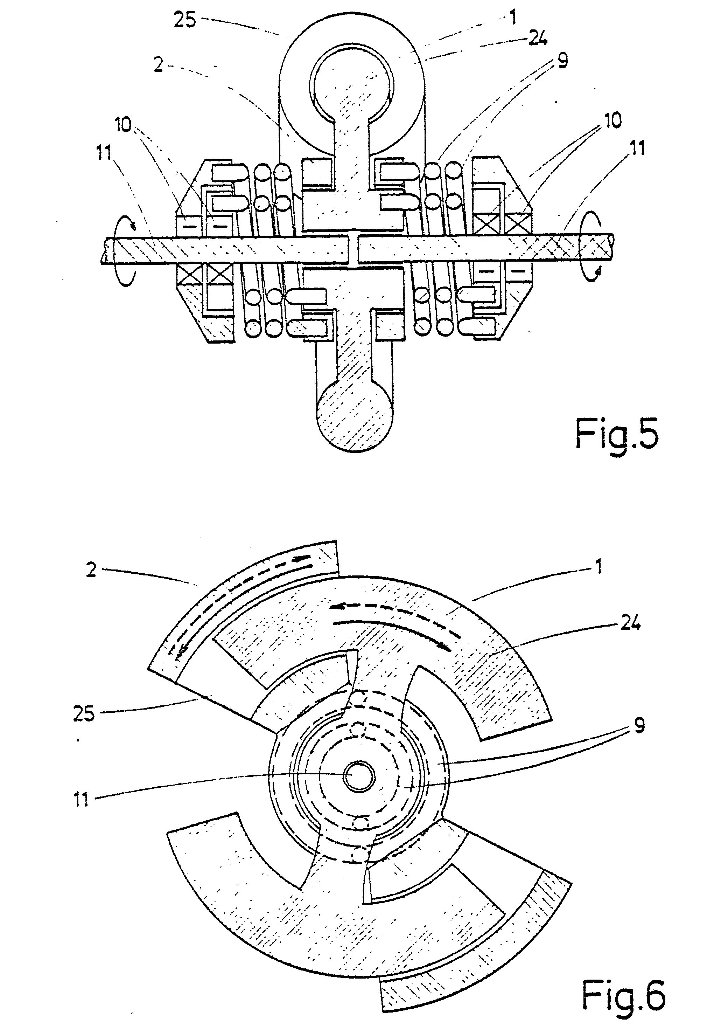

Elektromechanischer Schwingmotor mit stufenlosem Federgetriebe. In den Figuren 5 und 6 ist im Längs- und Querschnitt eine erfindungsgemäße Motor-Getriebe-Kombination skizziert, bei der der Motor um eine Rotationsachse schwingt. Die Motor-Rotationsachse bildet gleichzeitig die Achse für zwei koaxial angeordnete Abtriebswellen 11, die über Freiläufe 10 und gewundene Biegefedern 9 mit den gegeneinander schwingenden Bauteilen 1 und 2 verbunden sind. Das Bauteil 1 besteht aus zwei sich diametral gegenüberliegenden permanent magnetischen Schwingankern 24 und ihren Befestigungselementen und Lagern, das Bauteil 2 besteht aus zwei entsprechend diametral angeordneten Spulen 25, die mit Wechselstrom gespeist werden, und ihren Befestigungselementen und Lagern. Die Trägheitsmomente der Bauteile 1 und 2 und die Charakteristik der zugehörigen Federn 9 müssen aufeinander abgestimmt sein. Vorteilhaft für gleichmäßigen Lauf und eine gute Charakteristik sind gleiche Trägheitsmomente und vorgespannte Federn 9 von gleicher, möglichst progressiver Federcharakteristik. Die beiden gewundenen Biegefedern 9 in Figur 5, die auf dieselbe Abtriebswelle 11 wirken, sind zwar von unterschiedlicher Größe, um einen kompakten Getriebeaufbau zu ermöglichen, aber durch geeignete Wahl von Feder- und Drahtdurchmesser ist eine praktisch gleiche Federcharakteristik zu erreichen.

Der beschriebene elektromechanische Schwingmotor mit stufenlosen Federgetrieben besitzt zwei Abtriebswellen 11, die sich mit entgegengesetzt gleichem Drehmoment in entgegengesetzten Richtungen drehen. Für manche Anwendungen, z. B. für Mahlwerke, kann man beide Bewegungen brauchen. Die im Gehäuse gelagerten Wellen 11 — in Figur 5 und 6 nicht eingezeichnet — übertragen dann kein Drehmoment auf das Gehäuse. Da der Motor nur schwingt und nicht rotiert, ist eine Stromzuführung zu den Spulen über elastische Kabel möglich.

Bei vielen Anwendungen wird nur eine Drehrichtung benötigt. Man kann dann wie im Beispiel 1 beschrieben und in den Figuren 3 und 4 skizziert, die Drehbewegungen der Wellen 11 über Zahnräder 12 und 23 auf eine gemeinsame Abtriebswelle 22 übertragen. Man kann aber auch eine der beiden Wellen 11 fest mit dem Gehäuse koppeln und die andere Welle 11 als Abtriebswelle benutzen. Anker und Spulen machen dann zusätzlich zu ihrer Schwingbewegung eine Drehbewegung, deren Drehzahl bei gleichen Federn die Hälfte der Abtriebsdrehzahl beträgt. Die Stromzuführung muß dann über Schleifkontakte oder kapazitiv oder induktiv erfolgen.

Koppelt man die andere der beiden Wellen 11 mit dem Gehäuse und erfolgt der Abtrieb über die zuvor gehäusefeste Welle 11, so kehrt sich die Abtriebsdrehrichtung um. durch Kopplung der beiden Abtriebswellen 11 mit Schaltgetrieben läßt sich die Charakteristik der beschriebenen erfindungsgemäßen Motor-Getriebe-Kombination an unterschiedliche Arbeitsbedingungen anpassen.

Das beschriebene zweite Beispiel einer erfindungsgemäßen Motor-Getriebe-Kombination kann man als einen Wechselstrom-Rotationsmotor auffassen, dessen Drehzahl von der Antriebsleistung und dem Abtriebsdrehmoment abhängig ist. Er zeigt ein ähnliches Regelverhalten wie ein Gleichstrommotor, ohne daß eine Stromzuführung über Schleifkontakte erforderlich ist.

In den beiden Ausführungsbeispielen werden nur einige wenige Punkte angesprochen, die für erfindungsgemäße Schwingmotor-Federgetriebe-Kombinationen wichtig sind. Es gibt viele vorteilhafte Variationen, von denen einige im folgenden kurz behandelt werden. Grundlagen und Variationen von stufenlosen, lastabhängigen Federgetrieben werden in EP-A-0 021 452 beschrieben.

Als Motoren für erfindungsgemäße Motor-Getriebe-Kombinationen kommen alle Antriebsmechanismen infrage, bei denen mindestens zwei Bauteile eine gegenläufige Schwingbewegung ausführen, oder die so umgebaut werden können, daß das der Fall ist. Die Schwingbewegung kann linear sein wie im Beispiel 1, sie kann auf einer Kreisbahn erfolgen wie im Beispiel 2 oder auf anderen komplizierten Bahnen. Der Schwingbewegung kann auch eine gleichförmige Bewegung, z. B. eine Drehbewegung, überlagert sein.

Als Motor geeignet sind alle Hubkolbenmotoren, insbesondere Verbrennungsmotoren, aber auch hydraulische ooder pneumatische Motoren, Stirling-Motoren, Dampfmaschinen und andere Kolbenmotoren. Anstelle des im Beispiel 1 beschriebenen Zweitaktmotors kommt auch ein Viertaktmotor infrage, der dann drei miteinander verbundene Kolben und vier Verbrennungsräume hat, deren Beschickung über Ventile gesteuert wird.

Die beiden Arbeitsräume 7 und 8 des in den Figuren 1 oder 2 skizzierten Hubkolbenmotors können auf einen reduziert werden, wenn die Rückbewegung nicht durch einen zweiten Arbeitstakt erfolgt, sondern z. B. durch eine Stahlfeder, die an der Stelle des anderen Arbeitsraumes angebracht ist. In diesem Fall ist es zweckmäßig, auch die Zahl der Freiläufe und Federn zu halbieren, so daß bei jedem Arbeitstakt, nicht aber bei der Rückbewegung Antriebsenergie auf die Federgetriebe übertragen wird.

Durch ähnliche Maßnahmen kann auch bei einem Viertaktmotor die Zahl der Verbrennungsräume auf die Hälfte reduziert werden. Sogar ein Viertaktmotor mit nur einem Verbrennungsraum ist möglich, wenn man den Motor mit einem schwingungsfähigen Gebilde koppelt und in der Nähe der Eigenresonanz betreibt.

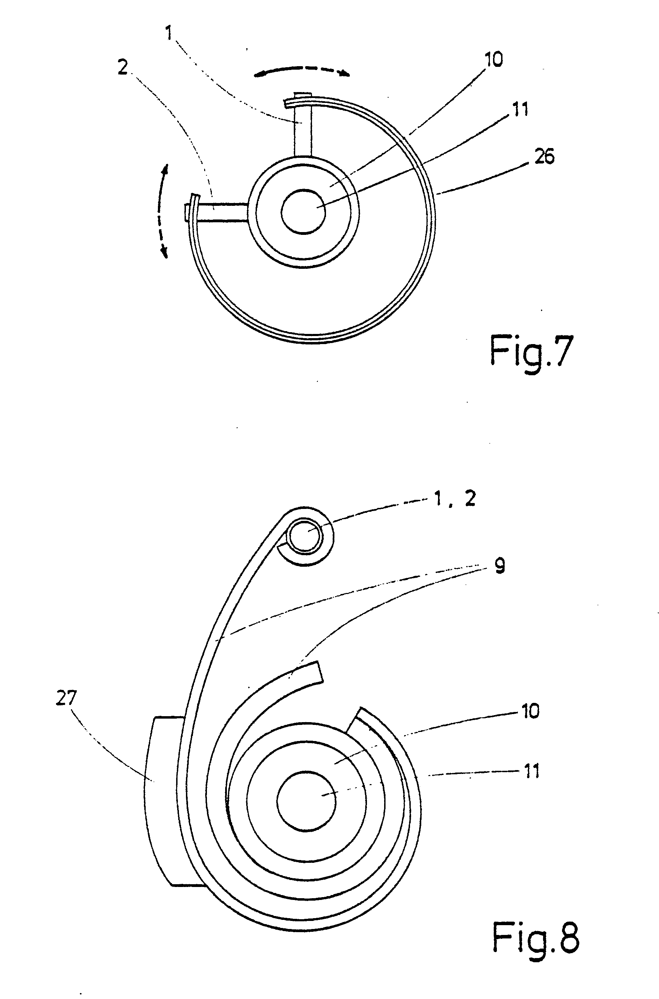

Als Motoren für erfindungsgemäße Motor-Getriebe-Kombinationen sind alle elektromechanischen Schwingmotoren geeignet, die mit Wechselstrom oder gepulstem Gleichstrom betrieben werden oder durch Umpolen oder Umschalten aus Gleichstrom einen Wechselstrom oder gepulsten Gleichstrom für ihren Betrieb selbst erzeugen. Das sind einmal die elektromagnetischen Schwinger, von denen eine Ausführungsform mit zwei Ankern und zwei Spulen im Beispiel 2 beschrieben wurde. Es gibt viele andere geeignete Ausführungsformen, etwa solche mit nur einem Anker und einer Spule oder auch linear arbeitende Schwinger. Geeignet sind auch piezoelektrische oder magnetostriktive Schwinger. Die beiden gegeneinander schwingenden Bauteile sind bei einfachen Ausführungsformen dieser Art zwei Massen, die über den piezoelektrischen oder magnetostriktiven Schwinger miteinander verbunden sind und ihre Schwingungsenergie über Federgetriebe in Rotationsenergie umsetzen. Besonders einfache Bauformen ergeben sich, wenn die elastischen Eigenschaften des Schwingmotors die Funktion der Federn des Federgetriebes weitgehend übernehmen. In Figur 7 ist eine derartige erfindungsgemäße Motor-Getriebe-Kombination skizziert, bei dem die Enden eines kreisförmig gebogenen piezoelektrischen Schwingers mit Freiläufen 10 verbunden sind, die wie in Figur 5 auf zwei Abtriebswellen 11 sitzen. Die beiden gegeneinander schwingenden Bauteile 1 und 2 werden jeweils durch ein Ende des piezoelektrischen Schwingers, die äußeren Freilaufschalen und die Befestigungselemente gebildet. Die für die stufenlose lastabhängige Getriebefunktion erforderliche Federwirkung übernimmt der piezoelektrische Schwinger selbst. Bei allen Schwingmotoren ist eine gewisse Federwirkung vorhanden, die zwar berücksichtigt werden muß, normalerweise aber eine untergeordnete Rolle spielt.

Erfindungsgemäße Schwingmotor-Federgetriebe-Kombinationen sind nicht auf Motoren beschränkt, bei denen exakt zwei Bauteile gegeneinander schwingen. Die Zahl der schwingenden Bauteile ist im Prinzip nicht begrenzt und die Schwingbewegung kann wesentlich komplizierter als die in den einfachen Ausführungsbeispielen beschriebene sein. Im Sinne der Erfindung reicht es aus, wenn die Schwingbewegung von einem der gegeneinander schwingenden Bauteile durch ein Federgetriebe in eine Drehbewegung übertragen wird. Durch das Prinzip des Gegeneinanderschwingens wird die Schwingungsenergie der Bauteile, die nicht mit einem Federgetriebe verbunden sind, schließlich auf das Bauteil übertragen, das über sein Federgetriebe Energie an die Abtriebswelle liefert. Es ist zweckmäßig, die Masse eines nicht mit einem Federgetriebe verbundenen schwingenden Bauteils groß zu wählen, damit seine Schwingbewegung klein bleibt.

Die Rotationsbewegung der Abtriebswellen 11 oder 22 ist nicht konstant, sie schwankt im selben Sinne wie die Motorschwingungen, allerdings gleichgerichtet und durch die Federn 9 und die Schwungmasse der drehenden Getriebeteile gemildert, so daß die Schwankung normalerweise unberücksichtigt bleiben kann. Um einen möglichst gleichmäßigen Lauf zu erreichen, werden die Massen oder die Trägheitsmomente der gegeneinander schwingenden Bauteile und die zugehörigen Federgetriebe gleich groß gewählt. Eine weitere Verbesserung bringt die Verwendung mehrerer gleichartiger Schwingmotoren, die mit gleicher Frequenz, aber phasenverschoben arbeiten, wobei eine gleichmäßige Phasenverteilung über alle schwingenden Motorbauteile angestrebt wird.

Bei einem elektromechanischen Schwingmotor werden z. B. drei Motoren nach Beispiel 2 zusammengefaßt und mit Drehstrom betrieben. Dabei können die drei Motoren mechanisch unabhängig voneinander auf dieselben Abtriebswellen wirken oder aber jeweils zwei schwingende Bauteile miteinander verbunden werden, so daß schließlich ein Motor mit drei gegeneinander schwingenden Bauteilen entsteht.

Drehzahl- bzw. Drehmomentänderungen der Abtriebswelle übertragen sich zwangsläufig auch auf das Gehäuse, wenn der Abtrieb nur in einer Drehrichtung erfolgt. Das gilt für jede Motor-Getriebe-Kombination. Beim Kraftfahrzeug z. B. ist man an diese Gehäusebewegungen gewöhnt und empfindet sie allenfalls bei ruckartigem Bremsen als störend.

Die Befestigung erfindungsgemäßer Schwingmotor-Federgetriebe-Kombinationen im Gehäuse erfolgt so, daß abgesehen von der eben beschriebenen unvermeidbaren Drehmomentübertragung nur geringe Kräfte auf das Gehäuse übertragen werden. Im Beispiel 1 sind Gleitlager 13 zwischen Zylinderblock 5 und Gehäuse 20 vorgesehen, die den Motor im Gehäuse fixieren bis auf den Freiheitsgrad, der für die Schwingbewegung erforderlich ist. Durch die gegensinnig angebrachten Federn 9 der Federgetriebe, deren Wellen 11 und 22 im Gehäuse gelagert sind, wird erreicht, daß der Motorschwerpunkt trotz der freien Schwingung seine Lage nur wenig ändern kann. Mit zusätzlichen federnden und/oder gedämpften Anschlägen zwischen Motor und Gehäuse kann man verhindern, daß der Motor bei starken äußeren Kräften in Schwingungsrichtung — Katastrophenfall ! — aus seiner Lagerung rutscht.

Bei Schwingmotoren mit etwa gleicher Masse der gegeneinander schwingenden Bauteile ist es von Vorteil, die Lagerung im Gehäuse an allen schwingenden Bauteilen im gleichen Sinne vorzunehmen, da dann die Reibungskräfte in den lagern gegensinnig gleich sind und vom starren Gehäuse aufgenommen werden. Bei Motoren mit unterschiedlichen Massen der schwingenden Bauteile ist es von Vorteil, die lagerung an dem Bauteil vorzunehmen, das die kleinste Schwingbewegung ausführt.

Die Befestigung des Schwingmotors im Gehäuse kann mit Lagern unterschiedlicher Bauform, auf Magnetkissen oder Luftlagern schwebend oder mit einer Federaufhängung erfolgen. Gegenüber der starren gleitenden Lagerung hat die weiche Lagerung den Vorteil, daß senkrecht zur Schwingungsrichtung wirkende kräfte aufgefangen werden und nur zu einem Teil auf das Gehäuse übertragen werden. Die weiche lagerung muß so konstruiert sein, daß keine Resonanzschwingungen entstehen können.

Die Befestigung des Schwingmotors im Gehäuse kann auch über das oder die Federgetriebe erfolgen. Im Beispiel 2 ist der Schwinganker 24 bzw. das Bauteil 1 auf den Abtriebswellen 11 und diese im Gehäuse gelagert. Die Spulen 25 bzw. das Bauteil 2 ist auf der Schwingankerhohlwelle gelagert.

Der Schwingmotor kann auch frei an den Federn 9 der Federgetriebe hängen. Man kann z. B. anstelle der Spiralfedern 9 des Beispiels 1 Blattfedern verwenden, deren eines Ende mit den Freiläufen 10 und deren anderes Ende mit den Schubstangen 4 oder 6 des Schwingmotors verbunden ist, der dann unter den Federgetrieben hängt. Ein weiteres Beispiel für die direkte Aufhängung eines leichten piezoelektrischen Schwingmotors 26 am Getriebe zeigt Figur 7. Hier sind Getriebe und Motor nicht mehr eindeutig voneinander zu trennen.

Die Federgetriebe können in unterschiedlichen Ausführungsformen gebaut werden, wie in der EP-A-0 021 452 beschrieben wird. Alle elastischen Effekte können als Grundlage für die Federn benutzt werden. Vorteilhaft ist die Verwendung hochwertiger Stahl- oder Metallfedern, weil hier die Verluste sehr klein sind, hohe Rückstellkräfte bei kleinem Volumen und Gewicht erreicht werden und große technische Erfahrungen vorliegen. Außer den in den Beispielen erwähnten Spiralfedern, gewundenen Biegefedern und Blattfedern können alle bekannten Federformen Verwendung finden, z. B. Zug- und Druckfedern, Stabfedern und Tellerfedern. Die Federn können an unterschiedlichen Stellen im Getriebe sitzen, auch miteinander oder mit dem Gehäuse über Hilfsfedern gekoppelt sein, wenn nur gewährleistet ist, daß sie während des Betriebes durch den Schwingmotor periodisch lastabhängig gespannt und entspannt werden und während der Federentspannungsphase ihre gespeicherte Energie an die Abtriebswelle weiter und/oder an den Schwingmotor zurückgeben.

Vorteilhaft für eine gute Getriebecharakteristik in einem weiten Drehzahlbereich ist die Verwendung von Federn oder Federkombinationen mit progressiver oder S-förmiger Charakteristik. Um auch bei hohen Drehzahlen große Abtriebsdrehmomente erzeugen zu können, empfiehlt sich die Verwendung von vorgespannten Federn. Eine vorteilhafte Federkombination ist in Figur 8 skizziert. Zwei Spiralfedern 9 sind mit ihrem inneren Ende an der Nabe des Freilaufs 10 befestigt. Auf der Nabe befindet sich auch ein Anschlag 27, durch den die äußere der beiden Federn 9 eine Vorspannung erhält. Der Anschlag 27 kann auch selbst eine Feder sein. Das äußere Ende der äußeren Spiralfeder 9 ist an einem der gegeneinander schwingenden Bauteile 1 oder 2 des Schwingmotors befestigt. Bei Betrieb mit einem Drehmoment unterhalb der Federvorspannung wird die Feder kaum gespannt, die Drehzahl ist groß. Bei zunehmendem Drehmoment wird die äußere Feder 9 immer stärker gespannt und entspannt, bis schließlich bei großem Drehmoment auch die innere stärkere Feder 9 mitwirkt. Schließlich legen sich beide Federn 9 in vollgespanntem Zustand an die nabe an. Das Abtriebsdrehmoment ist dann sehr groß und die Drehzahl sehr klein.

Stufenlose Federgetriebe können auch so ausgelegt werden, daß bei kleinen Drehzahlen das Abtriebsdrehmoment wieder abnimmt. Mit unterschiedlichen Konstruktionen und Federcharakteristiken läßt sich fast jede gewünschte Abtriebscharakteristik verwirklichen. Stufenlose Federgetriebe können so ausgelegt werden, daß bei festgehaltener Abtriebswelle ein kupplungsloser Leerlauf des Schwingmotors möglich ist. Das vom Schwingmotor gelieferte Schubmoment ist dann sehr klein, die Federn 9 liefern jeweils ihre gespeicherte Energie an den Schwingmotor zurück und die erfindungsgemäße Motor-Getriebe-Kombination läuft in einer Art Eigenschwingung.

Wenn die an den Federn 9 der Federgetriebe befestigten schwingenden Motorbauteile 1 oder 2 nicht auf einer Kreisbahn um die Getriebewellen 11 schwingen, sondern z. B. linear wie im Beispiel 1, so treten quer zur Schwingungsrichtung Kräfte auf, die bei kleinen Schwingungsamplituden von den Federn 9 aufgenommen werden. Bei großen Amplituden kann man entweder den Motor so weich aufhängen, daß er die Querschwingungen verkraftet oder durch eine geeignete Konstruktion der Verbindung zwischen Federende und schwingendem Motorbauteil dafür sorgen, daß das Federende sich auf der gewünschten Kreisbahn bewegt ohne daß der Motor Querschwingungen ausführt.

Bisher wurde stillschweigend angenommen, daß die Steifigkeit der Federn 9 ausreicht, um bei offenem Freilauf 10 eine einwandfreie Rückwärtsbewegung der Freilaufnabe zu gewährleisten. Diese Aufgabe kann auch von einer Vorrichtung übernommen werden, die eine starre Verbindung zwischen schwingendem Motorbauteil und Freilaufnabe herstellt, sobald die zugehörige Feder 9 auf die vorgesehene Vorspannung entspannt ist.

Für manche Anwendungsfälle ist es nützlich, wenn während des Betriebes die Charakteristik der Motor-Getriebe-Kombination geändert und an andere Abtriebsbedingungen angepaßt werden kann. Bei erfindungsgemäßen Schwingmotor-Federgetriebe-Kombinationen kann die Änderung über den Schwingmotor und/oder über das Federgetriebe erfolgen. Durch Ankoppeln von Federn kann man z. B. die Schwingungseigenschaften des Motors ändern. Eine weitere Einflußnahme auf den Motor ist z. B. bei Verbrennungsmotoren über den Zündzeitpunkt und bei elektromechanischen Motoren über die Form des Wechselstromes möglich. Auch über die Federgetriebe gibt es mehrere Eingriffsmöglichkeiten. Die Getriebecharakteristik läßt sich ändern durch Änderung der Federvorspannung, durch Zuschalten oder Wegnehmen von Federn über Schaltkupplungen oder durch Änderung des Schwingungswinkels oder des Hebelarmes der Schwinge. Ersetzt man die Freiläufe 10 durch Schaltkupplungen, so hat man über die externe Steuerung der Federspannungszeiten einen direkten Einfluß auf die Getriebecharakteristik. Eine Anpassung an unterschiedliche Abtriebsbedingungen kann man auch dadurch erreichen, daß ein Schwingmotor mehrere Federgetriebe von unterschiedlicher Charakteristik betreibt, von denen jeweils die passenden an die Abtriebswellen angekoppelt werden und die nicht benutzten leer mitlaufen. Natürlich kann man auch bekannte Schaltgetriebe mit erfindungsgemäßen Motor-Getriebe-Kombinationen koppeln. Durch geeignete Kopplung der Getriebewellen 11 erfindungsgemäßer Motor-Getriebe-Kombinationen untereinander, mit dem Gehäuse und/oder mit zusätzlichen Getrieben ergeben sich weitere Variationsmöglichkeiten, von denen einige im Beispiel 2 beschrieben werden.

Die beschriebenen Vorrichtungen und Maßnahmen zur Änderung der Charakteristik der Schwingmotor-Federgetriebe-Kombinationen werden durch einen Schaltvorgang von Hand oder automatisch in Abhängigkeit von vorgegebenen Stellgrößen betätigt.

Bisher wurden der Einfachheit halber Beispiele und Variationen mit einer oder zwei Abtriebswellen beschrieben. Ein Schwingmotor kann aber über mehrere Federgetriebe mehrere Abtriebswellen bewegen, z. B. bei einem Kraftfahrzeug mit Vierradantrieb. Dabei können die Federgetriebe auch unterschiedlich sein, so daß sich Abtriebe mit unterschiedlichen Eigenschaften ergeben. Es können auch zur Verbesserung der Charakteristik mehrere unterschiedliche Federgetriebe auf eine Abtriebswelle wirken. Ebenso können mehrere, auch unterschiedliche Schwingmotoren über ihre Federgetriebe auf dieselbe Abtriebswelle wikren. Erfindungsgemäße Schwingmotor-Federgetriebe-Kombinationen können also einen wesentlich komplexeren Aufbau haben, als in den einfachen Beispielen beschrieben wurde.

**Patentansprüche**

1. Schwingmotor-Federgetriebe-Kombination mit einem oder mehreren Antriebsschwingmotoren, die periodsiche Hin- und Herbewegungen oder einer gleichförmigen Bewegung überlagerte periodische Hin- und Herbewegungen ausführen, und einem oder mehreren Federgetrieben, die die Antriebsbewegung oder -bewegungen über Federn (9) und Freiläufe (10) und/oder Schaltkupplungen auf eine oder mehrere sich drehende Abtriebswellen übertragen, wobei die Federn (9) periodisch last- und antriebsabhängig gespannt und entspannt werden, so daß sich die Abtriebsdrehzahl oder -drehzahlen stufenlos last- und antriebsabhängig einstellen, dadurch gekennzeichnet, daß der oder die Antriebsschwingmotoren mindestens zwei gegeneinander schwingende Bauteile (1, 2) enthalten, die keine starre Verbindung zu einem Gehäuse haben und mindestens eins der Bauteile (1 oder 2) so mit dem Gehäuse zusammenwirkt, daß die Schwingbewegung oder -bewegungen nicht oder nur geringfügig behindert werden oder keine oder nur wenig Schwingungsenergie auf das Gehäuse übertragen wird, was durch gleitende oder schwebende lagerung, durch elastische Aufhängung oder über sich am Gehäuse abstützende Federgetriebe erreicht werden kann, und mindestens eins der Bauteile (1 oder 2) mit mindestens einem Federgetriebe gekoppelt ist.

2. Schwingmotor-Federgetriebe-Kombination nach Anspruch 1, dadurch gekennzeichnet, daß die gegeneinander schwingenden Bauteile (1, 2) eines Antriebsschwingmotors wenigstens annähernd gleiche träge Massen und/oder Trägheitsmomente haben und über wenigtens annähernd gleich gestaltete Federgetriebe ihre Antriebsschwingbewegungen in eine oder mehrere Abtriebsdrehbewegungen übertragen.

3. Schwingmotor-Federgetriebe-Kombination nach Anspruch 1, dadurch gekennzeichnet, daß zwei oder mehr schwingende Bauteile (1, 2) von einem oder mehreren Antriebsschwingmotoren ihre Antriebsenergie über Federgetriebe auf eine gemeinsame Abtriebswelle übertragen, wobei die Schwingungen der Motorbauteile mit gleicher Frequenz, aber phasenverschoben erfolgen, und wobei alle Phasenverschiebungen von einem Motorbauteil zum nächsten wenigstens annähernd gleich sind.

4. Schwingmotor-Federgetriebe-Kombination nach Anspruch 1, dadurch gekennzeichnet, daß der Antrieb über einen oder mehrere Hubkolbenmotoren mit zwei gegeneinander schwingenden Massen (1, 2) erfolgt.

5. Schwingmotor-Federgetriebe-Kombination nach Anspruch 4, dadurch gekennzeichnet, daß die Hubkolbenmotoren Verbrennungsmotoren sind.

6. Schwingmotor-Federgetriebe-Kombination nach Anspruch 1, dadurch gekennzeichnet, daß der Antrieb über einen oder mehrere elektromechanische Schwingmotoren erfolgt.

7. Schwingmotor-Federgetriebe-Kombination nach Anspruch 6, dadurch gekennzeichnet, daß die Schwingmotoren piezoelektrische oder magnetostriktive Schwingmotoren sind.

8. Schwingmotor-Federgetriebe-Kombination nach Anspruch 1, gekennzeichnet durch die Verwendung von Federn, die sowohl zur Funktion der Federgetriebe als auch zur Funktion der Antriebsschwingmotoren beitragen.

9. Schwingmotor-Federgetriebe-Kombination nach Anspruch 1, dadurch gekennzeichnet, daß in den Federgetrieben Federn (9) oder Federkombinationen mit wenigstens angenähert progressiver, hyperbel- oder s-förmiger Federcharakteristik verwendet werden.

10. Schwingmotor-Federgetriebe-Kombination nach Anspruch 1, gekennzeichnet durch Vorrichtungen und/oder Maßnahmen zur Änderung der Charakteristik der Schwingmotor-Federgetriebe-Kombination.

## Claims

1. Combination of a vibrator motor and a spring transmission with one or more driving vibrator motors working with periodical to and fro motions or with uniform motions and superimposed to and fro motions and with one or more spring transmissions transferring the driving motion or motions to one or more rotating driven shafts by springs (9) and by overunning (10) and/or engaging and disengaging clutches, the springs (9) being stretched and released periodically dependent on loading and driving, which leads to a driven speed of rotation steplessly variable and dependent on loading and driving, characterised in that the driving vibrator motor or motors contain at least two structural members (1, 2) oscillating against each other, the structural members (1, 2) having no stiff connection to a housing and at least one of the members (1 or 2) co-operating with the housing so that the oscillating motion or motions are not or not very much impeded and no or not very much oscillation energy is transferred to the housing, which can be attained by sliding or floating bearings, by elastic suspension or by spring transmissions supported by the housing, and at least one of the structural members (1 or 2) is connected with at least one spring transmission.

2. The combination of a vibrator motor and a spring transmission of claim 1, characterised by oscillating structural members (1, 2) of a driving vibrator motor with at least approximately equal masses and/or moments of inertia transferring their driving oscillations to one or more driven rotatary motions by at least approximately equal figured spring transmissions.

3. The combination of a vibrator motor and a spring transmission of claim 1, characterised by two or more oscillating structural members (1, 2) of one or more driving vibrator motors transferring their driving power to a common rotating driven shaft by spring transmissions, the structural members oscillating with the same frequency but with differences of phase, the differences of phase being at least approximately equal going from one structural member to the next one.

4. The combination of a vibrator motor and a spring transmission of claim 1, characterised by driving with one ore more piston motors with two masses (1, 2) oscillating against each other.

5. The combination of a vibrator motor and a spring transmission of claim 4, characterised in that the piston motors are internal combustion engines.

6. The combination of a vibrator motor and a spring transmission of claim 1, characterised by driving with one or more electromechanical vibrator motors.

7. The combination of a vibrator motor and a spring transmission of claim 6, characterised in that the electro-mechanical vibrator motors are piezoelectric or magnetostrictive motors.

8. The combination of a vibrator motor and a spring transmission of claim 1, characterised by the application of springs (9), which will serve the function of the spring transmissions as well as the function of the driving vibrator motors.

9. The combination of a vibrator motor and a spring transmission of claim 1, characterised by the application of springs (9) or spring-combinations in the spring transmissions, the characteristics of the springs (9) or spring-combinations being at least approximately progressive, hyperbolic or s-shaped.

10. The combination of a vibrator motor and a spring transmission of claim 1, characterised by devices and/or arrangements for changing the characteristic of said combination.

**Revendications**

1. Combinaison d'un moteur vibrateur et d'une transmission à ressort avec un ou plusieurs moteurs vibrateurs de commande faisant des mouvements de va-et-vient périodiques ou faisant un mouvement uniforme avec des mouvements de va-et-vient périodiques superposés, et avec une ou plusieurs transmissions à ressort transmettant le mouvement de commande sur un ou plusieurs arbres de sortie rotatifs par ressorts (9) et par roues libres (10) et/ou par embrayages, les ressorts étant tendus et relâchés périodiquement en fonction de la charge et de l'entraînement de sorte que la ou les vitesses de sortie se règlent en fonction de la charge et de l'entraînement, caractérisée en ce que le ou les moteurs vibrateurs de commande ont au moins deux éléments (1, 2) oscillant en sens inverse qui ne sont pas reliés rigidement avec une carosserie et desquels au moins un élément (1 ou 2) opère avec la carosserie de sorte que le ou les mouvements oscillatoires ne soient pas ou peu empêchés ou de sorte que rien ou peu d'énergie vibrationnelle soit transmis sur la carosserie, ce qu'on peut atteindre par paliers glissant ou flottant ou par une suspension élastique ou par transmissions à ressort se supportant sur la carosserie, et desquels au moins un élément (1 ou 2) est conjugué avec au moins une transmission à ressort.

2. Combinaison d'un moteur vibrateur et d'une transmission à ressort selon revendication 1, caractérisée en ce que les éléments (1, 2) oscillant en sens inverse d'un moteur vibrateur de commande ont du moins approximativement des mêmes masses inertes et/ou des mêmes moments d'inertie et qu'ils transmettent leurs mouvements oscillatoires de commande en un ou plusieurs mouvements rotatifs de sortie par des transmissions à ressort du moins approximativement similaires.

3. Combinaison d'un moteur vibrateur et d'une transmission à ressort selon revendication 1, caractérisée en ce que deux ou plus éléments (1, 2) oscillant d'un ou plusieurs moteurs vibrateurs de commande transmettent leur énergie d'entraînement sur un arbre de sortie commun par transmissions à ressort, avec les oscillations des éléments du moteur arrivant avec la même fréquence mais déphasé et toutes les déphasages d'un élément au suivant étant du moins approximativement égals.

4. Combinaison d'un moteur vibrateur et d'une transmission à ressort selon revendication 1, caractérisée en ce que l'entraînement arrive par un ou plusieurs moteurs à piston avec deux masses oscillant en sens inverse.

5. Combinaison d'un moteur vibrateur et d'une transmission à ressort selon revendication 4, caractérisée en ce que les moteurs à piston sont des moteurs à combustion interne.

6. Combinaison d'un moteur vibrateur et d'une transmission à ressort selon revendication 1, caractérisée en ce que l'entraînement arrive par un ou plusieurs moteurs vibrateurs électroméchaniques.

7. Combinaison d'un moteur vibrateur et d'une transmission à ressort selon revendication 6, caractérisée en ce que les moteurs vibrateurs sont des moteurs vibrateurs piézoélectriques ou magnétostrictifs.

8. Combinaison d'un moteur vibrateur et d'une transmission à ressort selon revendication 1, caractérisée par l'utilisation des ressorts qui aident soit au fonctionnement des transmissions à ressort soit au fonctionnement des moteurs vibrateurs de commande.

9. Combinaison d'un moteur vibrateur et d'une transmission à ressort selon revendication 1, caractérisée en ce qu'on utilise des ressorts (9) ou des combinaisons des ressorts avec une caractéristique du moins approximativement progressive, hyperbolique ou en forme de S dans les transmissions à ressort.

10. Combinaison d'un moteur vibrateur et d'une transmission à ressort selon revendication 1, caractérisée par dispositions pour changer la caractéristique de combinaison d'un moteur vibrateur et d'une transmission à ressort.

Fig.1

Fig.2

**Fig.3**

**Fig.4**

2

0 065 023

Fig.5

Fig.6

Fig.7

Fig.8